# FASCICULE DE BREVET EUROPEEN

(11) **EP 2 373 500 B1**
(45) Date de publication et mention de la délivrance du brevet: **31.10.2012**
(21) Numéro de dépôt: 09760909.3
(22) Date de dépôt: 02.12.2009
(51) Int. Cl.: B60C 11/11, B60C 11/12

(54) **BANDE DE ROULEMENT COMPORTANT DES INCISIONS ET DES CAVITES**
EINSCHNITTE UND AUSSPARUNGEN UMFASSENDES REIFENPROFIL
TIRE TREAD COMPRISING INCISIONS AND RECESSES

(30) Priorité: 05.12.2008 FR 0858299
(43) Date de publication de la demande: 12.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BERGER, Eric, F-63410 Loubeyrat (FR)
(74) Mandataire: Diernaz, Christian
(86) Numéro de dépôt international: PCT/EP2009/066213
(87) Numéro de publication internationale: WO 2010/063750

(56) Documents cités:
- EP-A- 0 820 885
- EP-A- 1 676 695
- GB-A- 511 271
- JP-A- 2 310 108
- JP-A- 2001 121 926

## Description

L'invention concerne les bandes de roulement de pneu et plus particulièrement des bandes de roulement pourvues d'une pluralité d'incisions et destinées notamment à équiper des pneus pour roulages hivernaux.

Une bande de roulement pour pneu comprend une surface de roulement destinée à venir en contact avec la chaussée pendant le roulage. Il est connu de pourvoir cette bande avec des rainures d'orientation générale circonférentielle et d'orientation générale transversale (parallèle à l'axe de rotation) pour favoriser le drainage de l'eau présente par temps de pluie sur la chaussée. Ces rainures délimitent une pluralité d'éléments de matière (blocs, nervures), chacun de ces éléments comportant une face de contact pour venir en contact avec la chaussée, des faces latérales coupant la face de contact selon des arêtes. Par direction circonférentielle, on entend une direction tangente à un cercle dont le centre est sur l'axe de rotation du pneu pourvu de la bande de roulement.

Pour augmenter la performance en roulage par temps de pluie sur une chaussée revêtue d'un film d'eau, il est connu de pourvoir en outre les éléments de la bande de roulement avec au moins une incision dont la largeur moyenne est sensiblement inférieure à la largeur des rainures et en général inférieure à 1 mm, de manière à ne pas diminuer de façon excessive la quantité de matière. Ces incisions peuvent être orientées transversalement et / ou circonférentiellement.

Sur chaque élément de matière de la bande, ces incisions délimitent plusieurs lames de matière dont les arêtes avec la face de contact sont utilisées pour couper le film d'eau présent sur une chaussée et établir un contact avec ladite chaussée. Il a été constaté que malgré la réalisation d'incisions, on atteignait une limite d'efficacité des arêtes supplémentaires créées par les incisions. Une augmentation trop importante du nombre d'incisions dans un même élément de matière n'est pas satisfaisante pour repousser les limites puisque cette augmentation assouplit en même temps l'élément de bande de roulement, ce qui peut réduire les performances dans des conditions de roulage sur chaussée sèche.

En effet, les incisions orientées transversalement et traversant en totalité le bloc délimitent des lames de gomme ayant un grand élancement (c'est-à-dire une grande longueur et une grande hauteur pour une largeur faible relativement à ces longueur et hauteur). On a alors constaté que les pressions de contact au voisinage des arêtes créées n'étaient pas suffisantes pour obtenir un effet technique approprié. Un objet de l'invention est d'augmenter les pressions de contact entre la bande de roulement et la chaussée au voisinage des arêtes transversales formées sur des éléments de relief.

Si cette disposition paraît intéressante puisqu'elle met en oeuvre une grande longueur d'arêtes transversales, elle peut encore être améliorée par la bande de roulement selon l'invention qui permet d'adapter de façon optimale les pressions de contact au voisinage des arêtes transversales pour tout type de roulage (sol sec et sol mouillé) en accentuant l'effet mécanique des arêtes.

La bande de roulement pour pneu de l'invention est décrite dans la revendication 1.

Avantageusement cette invention s'applique à des bandes de roulement pour pneu à usage hivernal pour lesquelles les incisions forment des lames ayant une longueur **L** et une largeur **d**, cette largeur **d** étant au plus égale à 50% de la longueur **L**.

Selon une variante préférentielle la bande de roulement proposée est telle que la somme des longueurs **Lc** de toutes les cavités d'une même lame est supérieure à 50% de la longueur L de ladite lame.

Encore plus préférentiellement, la bande de roulement proposée est telle que la somme des longueurs de toutes les cavités d'une même lame est supérieure à 80% de la longueur de ladite lame et en ce que la largeur de chaque cavité est supérieure à 80% de la largeur d de ladite lame, sans pour autant déboucher sur aucune des faces latérales de la lame.

Afin d'obtenir un effet pour la bande de roulement à l'état neuf, il est avantageux que les cavités d'une même lame soient situées, par rapport à la face de contact de l'élément, à une profondeur comprise entre 10% et 50% de la profondeur **H** des rainures.

Encore plus avantageusement, la distance minimale entre chaque cavité et la face de contact de l'élément est comprise entre 20% et 30% de la profondeur **H** des rainures.

D'une manière pratique, ces cavités peuvent être moulées sur la face interne de la bande de roulement, c'est-à-dire sur la face la plus à l'intérieur de la bande et donc la face la plus éloignée de la face de contact de ladite bande. Pour ce moulage d'une bande selon l'invention, on peut mouler des incisions prolongées par des cavités puis rapporter cette bande moulée sur une ébauche de pneu. Selon ce mode de réalisation, les cavités formées à l'intérieur de chaque lame d'un élément de relief permettent une modification des répartitions des pressions de contact au voisinage des premières arêtes de l'élément et des deuxièmes arêtes formée par les incisions transversales.

Dans un mode équivalent de réalisation, chaque cavité d'une lame est prolongée vers la face de contact de la lame par une incision de largeur inférieure à 1 mm et de longueur sensiblement égale à la dimension transversale de ladite cavité, cette incision ne débouchant sur aucune face latérale de la lame et étant orientée selon une direction sensiblement perpendiculaire à la direction des deuxièmes arêtes. Cette variante avantageuse de l'invention permet bien entendu un moulage facilité des cavités sans toutefois ajouter d'incisions transversales. En conséquence il est possible de ne pas modifier de façon sensible la rigidité de chaque lame sous un effort dirigé dans la direction du déplacement du pneu (soit sous effort moteur soit sous effort freineur).

Pour limiter la diminution de la rigidité longitudinale en cisaillement des éléments de la bande de roulement, chaque incision prolongeant une cavité a une longueur comprise entre 20% et 80% de la largeur **d** de la lame. La longueur **Lc** de la cavité prolongeant chaque incision longitudinale est avantageusement comprise entre 0.5 et 1.5 fois la longueur longitudinale de cette incision.

Avantageusement, chaque lame ayant un volume total **Ve**, calculé comme le volume de matière contenu entre les différentes faces délimitant ladite lame et sur une hauteur égale à la plus petite des profondeurs **H** et **P**, la somme des volumes des cavités d'une même lame est au moins égale à 20% et au plus égale à 80% du volume total **Ve** de ladite lame.

Encore plus avantageusement la somme des volumes des cavités d'une même lame est au moins égale à 40% et au plus égale à 60% du volume total **Ve** de ladite lame.

Dans une autre variante, chaque cavité d'une lame est prolongée vers l'intérieur de la bande par une incision de largeur inférieure à 1 mm, cette dernière étant elle même prolongée par une autre cavité. Dans cette variante, il est possible de retrouver après une usure partielle de la bande de roulement un fonctionnement sensiblement égal à celui de la bande à l'état neuf. L'incision formée entre deux cavités est orientée dans une direction perpendiculaire à la direction transversale de la lame.

Préférentiellement chaque cavité a une forme allongée dans une direction perpendiculaire au plan moyen de l'incision qu'elle prolonge et peut avoir, vue en coupe, une section choisie parmi les formes suivantes : circulaire, elliptique, triangulaire ou rectangulaire. Avantageusement, les cavités sont de forme cylindrique de section circulaire de diamètre **r** (égal dans le cas présent à la plus petite dimension **U** de la cavité), ce diamètre étant au plus égal à la longueur **Lc** de la cavité.

Les dimensions de chaque cavité sont telles que l'aire de sa section (dans un plan de coupe perpendiculaire à la direction transversale) est comprise entre 20% et 80% de l'aire de la section de la lame de gomme dans laquelle est formée. Cette section de la lame est prise dans un plan de coupe perpendiculaire à la direction transversale et est mesurée entre la face de contact de la lame et une profondeur égale à la profondeur **H** des rainures. Préférentiellement, la surface de la section de chaque cavité est égale à substantiellement 50% de la surface de la section de la lame.

Cette même invention peut également s'appliquer au cas d'une bande de roulement dont les éléments de sculpture sont particulièrement souples compte tenu de leur grand élancement. Par grand élancement d'un élément on entend ici qu'au moins une dimension de la face de contact de ces éléments est petite devant la profondeur des rainures ou incisions délimitant chaque élément.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue de la surface de roulement d'une bande de roulement selon l'invention, chaque élément comprenant une pluralité de lames et à l'intérieur de chaque lame une pluralité de cavités ;

La figure 2 montre un élément de la partie centrale de la bande montrée à la figure 1 ;

La figure 3 montre une vue en coupe selon la ligne III-III de l'élément de la figure 2 ;

La figure 4 montre une vue en coupe selon la ligne IV-IV de l'élément de la figure 2 ;

La figure 5 montre une vue de la surface de roulement d'une bande de roulement selon l'invention, chaque élément comprenant une pluralité de lames et à l'intérieur de chaque lame une pluralité de cavités, ces cavités se prolongeant vers la surface de roulement par des incisions ;

La figure 6 montre un élément de la partie centrale de la bande montrée à la figure 5 ;

La figure 7 montre une vue en coupe selon la ligne VII-VII de l'élément de la figure 6 ;

La figure 8 montre une vue en coupe selon la ligne VIII-VIII de l'élément de la figure 6 ;

Les figures 9 à 12 montrent des variantes d'éléments moulants employés pour le moulage des cavités d'une bande de roulement telle que montrée à la figure 5 ;

La figure 13 et la figure 14 montrent en coupe selon deux plans perpendiculaires entre eux une variante de réalisation selon laquelle chaque lame comprend plusieurs cavités les unes au dessus des autres dans le sens l'épaisseur de la bande de roulement.

Pour rendre aisée la lecture des figures et de la description, une même référence est employée dans les figures dès lors qu'elle désigne un même élément fonctionnel et/ou structurel.

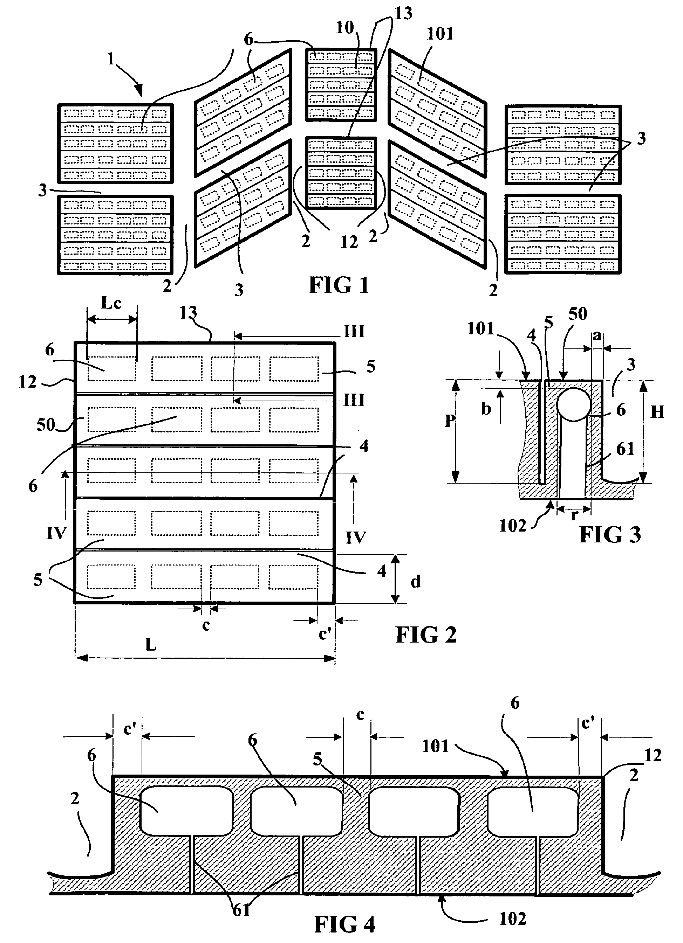

La figure 1 montre une vue de la surface de roulement 100 d'une bande de roulement 1 selon l'invention, cette bande de roulement comportant une pluralité de rainures d'orientation circonférentielle 2 (ou encore longitudinale) et de rainures transversales 3, ces rainures ayant une même profondeur H. Les rainures transversales 3 sont orientées de manière à faire, avec l'axe de rotation du pneu pourvu de ladite bande de roulement, un angle nul ou au plus égal à 45°. Par définition, dans ce qui suit, une direction est dite transversale dès lors qu'elle fait un angle au plus égal à 45° avec la direction de l'axe de rotation du pneu. La bande de roulement comprend une surface de roulement destinée à venir en contact avec la chaussée et une surface interne destinée à être liée au reste du pneu. Les rainures circonférentielles et transversales délimitent des éléments 10 comprenant une face de contact 50 et des faces latérales coupant la surface de roulement selon des premières arêtes 12, 13, certaines de ces arêtes étant d'orientation circonférentielle et les autres d'orientation transversale.

Sur la figure 2, on voit qu'un élément 10 est découpé par plusieurs incisions transversales 4 d'une profondeur **P** égale à la profondeur **H** des rainures, ces incisions débouchant à la fois sur la face de contact 101 de l'élément 10 et sur deux faces latérales de l'élément. Chaque élément de la bande de roulement est en conséquence divisé en une pluralité de lames 5 de matière dont une grande dimension correspond à la longueur **L** de la lame et une direction perpendiculaire à cette longueur est la largeur **d** de ladite lame. Dans le cas présenté, toutes les lames 5 ont des largeurs **d** égales entre elles, mais bien entendu ces largeurs peuvent être différentes dans un même élément ou dans des éléments distincts. Toutes les lames ont ici une hauteur égale à **H**.

À l'intérieur de chaque lame 5, il est formé une pluralité de cavités 6 de forme cylindrique de diamètre **r** et de plus grande dimension **Lc** supérieure au diamètre **r**.

Sur la coupe faite selon une ligne III-III correspondant à un plan de coupe perpendiculaire à l'axe de rotation et montrée à la figure 3, on distingue une lame 5 de largeur d délimitée par une rainure 3 et par une incision 4, et à l'intérieur de cette lame 5 une cavité 6 prolongée vers la surface interne 102 de la bande de roulement par une incision 61 facilitant le moulage de cette cavité. Les cavités 6 sont toutes formées à un même niveau dans la lame 5 de façon à être à une distance **b** de la face de contact de la lame qui est dans le cas présent égale à 10% de la profondeur **P** des incisions d'un élément. Cette distance **b** correspond à l'épaisseur de matière située entre la cavité et la face de contact 100 de la lame 5 à l'état neuf.

La distance minimale a séparant les cavités des faces latérales transversales d'une lame 5 est comprise entre 10% et 50% de la largeur **d** de la lame et dans le cas présent, cette distance minimale est égale à 25% de ladite largeur **d**.

Sur la coupe faite selon une ligne IV-IV correspondant à un plan de coupe contenant à l'axe de rotation et montrée à la figure 4, on voit quatre cavités 6 prolongées chacune par une incision 61 débouchant sur la surface interne 102 de la bande. Ces cavités sont disposées de manière à être séparées entre elles d'une distance c sensiblement égale au 1:25 de la longueur **L** de la lame dans laquelle elles sont formées. Par ailleurs les cavités les plus proches des faces latérales sont à une distance **c'** de ces faces sensiblement égale à 1:25 de la longueur **L** de la lame.

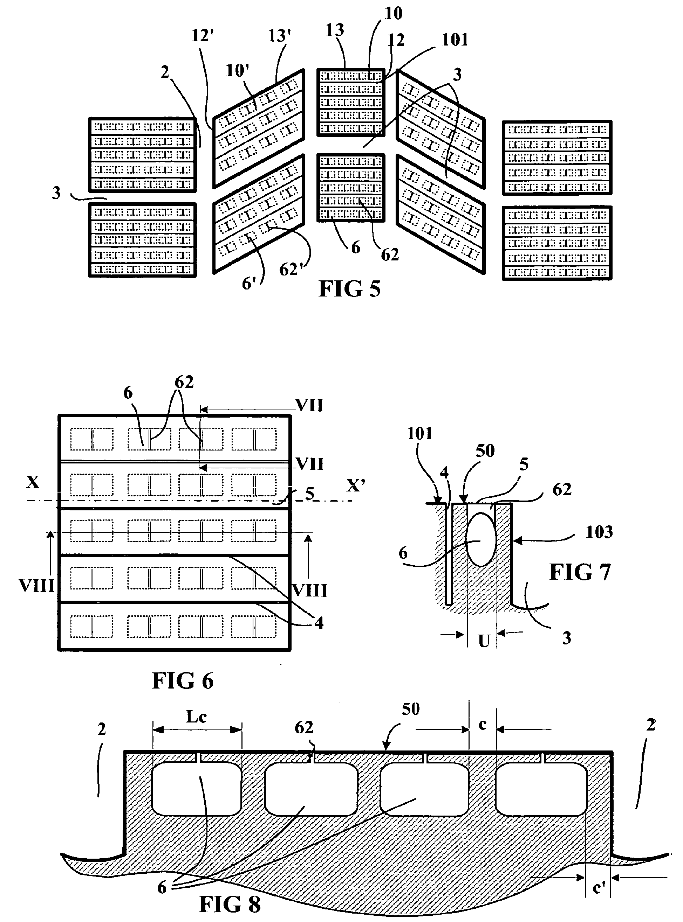

La figure 5 montre une bande de roulement similaire à celle montrée à la figure 1, la seule différence résidant dans le fait que chaque cavité 6 est prolongée par une incision 62, non pas vers l'intérieur de la bande, mais vers la surface de roulement de la bande. Cette incision 62 ne débouche sur aucune face latérale de la lame 5. Par ailleurs cette incision 5 est orientée dans une direction qui n'est pas la direction transversale.

La figure 6 montre un élément 10 de la partie médiane de la bande de la figure 5 comportant quatre incisions transversales 4 débouchant sur deux faces latérales et délimitant cinq lames 5 de longueur **L** et de largeur **d.** La longueur de ces lames 5 s'étend dans une direction parallèle à la direction XX' correspondant à la direction de l'axe de rotation du pneu pourvu de cette bande.

Sur la figure 7 montrant une coupe dans un plan perpendiculaire à l'axe de rotation et dont la trace est montrée par la ligne VII-VII sur la figure 6, on distingue une lame 5 délimitée par une rainure de profondeur **H** et une incision de profondeur **P** et à l'intérieur de cette lame une cavité 6 de section elliptique. Cette cavité 6 est prolongée vers la surface de roulement par une petite incision 62 d'orientation sensiblement perpendiculaire à l'axe de rotation et d'une longueur égale à la largeur U de la cavité dans ce plan de coupe.

Sur la figure 8, montrant une coupe dans un plan contenant l'axe de rotation et dont la trace est montrée par la ligne VIII-VIII sur la figure 6, on voit quatre cavités 6 prolongées vers la surface de roulement par des incisions 62 de largeur sensiblement égale à 0.6 mm.

Dans cette même variante, on peut voir des éléments 10' dans les parties intermédiaires de la bande ayant des premières arêtes circonférentielles 12' et d'autres qui sont transversales 13'. Ces dernières arêtes 13' faisant avec l'axe de rotation XX' un angle égal à 30°. Dans cet exemple, les incisions 62' prolongeant les cavités 6' sont inclinées par rapport à la direction circonférentielle (direction perpendiculaire à l'axe XX') d'un angle égal à 30°. On considère dans ce cas que la composante transversale de ces petites incisions 62' ne perturbe pas de façon sensible la rigidité de la bande dans la direction parallèle à l'axe de rotation.

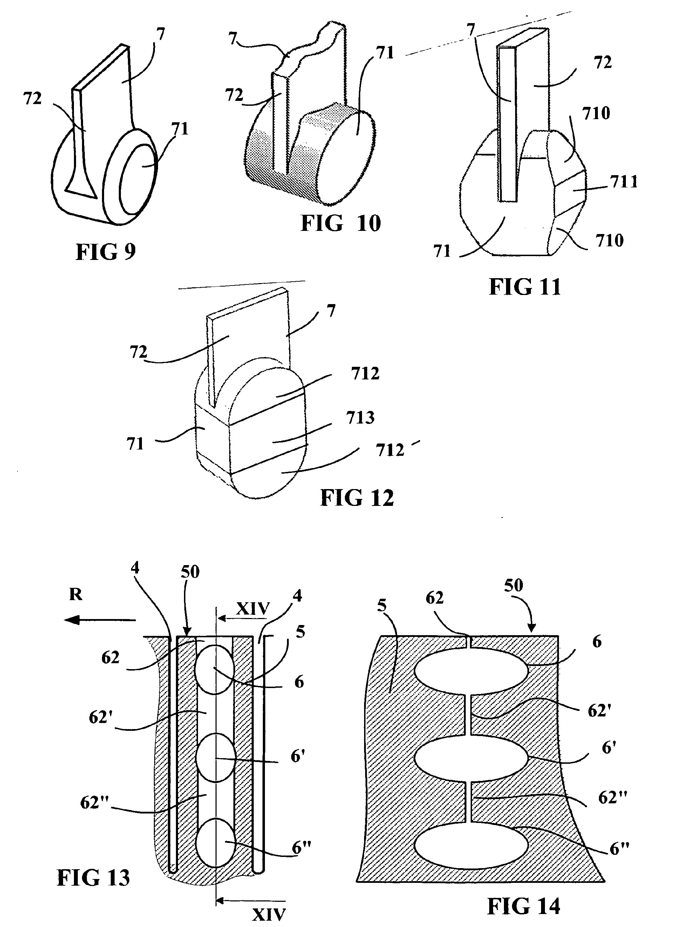

Les figures 9 à 12 montrent diverses variantes d'éléments moulants 7 destinés à mouler des cavités prolongées d'incisions dans une bande de roulement selon l'invention. La figure 9 montre un élément moulant 7 comportant un corps 71 cylindrique d'axe XX', portant une lame 72 perpendiculaire à l'axe XX'.

Dans la variante de la figure 10, le corps cylindrique 71 de l'élément moulant 7 est de forme ondulée autour d'une direction perpendiculaire à l'axe XX' du corps cylindrique.

La variante de la figure 11 comprend un corps 71 de forme générale cylindrique et ayant à ses extrémités des surface inclinées 710 réunies entre elles par une surface 711 perpendiculaire à l'axe XX'.

La dernière variante montrée à la figure 12 comprend un corps 71 formé par deux demi parties cylindriques 712 reliées entre elles par une partie cylindrique 713.

Une autre variante de réalisation de bande de roulement selon l'invention est montrée avec les figures 13 et 14. Ces figures 13 et 14 montrent des vues en coupe, ces coupes étant faites dans deux plans perpendiculaires entre eux, d'une variante de réalisation selon laquelle chaque lame de la bande de roulement comprend plusieurs cavités placées les unes au dessus des autres dans le sens l'épaisseur de la bande de roulement.

Sur la figure 13, on distingue trois cavités 6, 6', 6", chacune de ces cavités étant prolongées dans la direction de la surface de roulement par une incision 62, 62', 62" respectivement. On voit dans le plan de la figure 14 que ces cavités ont des sections de formes ovales. La flèche R indique la direction de rotation du pneu, c'est-à-dire la direction circonférentielle.

L'invention n'est pas limitée aux exemples décrits et représentés et diverses modifications peuvent y être apportées sans sortir de son cadre selon les revendications ci-jointes.

## Revendications

1. Bande de roulement pour pneu comportant une pluralité d'éléments (10) formant relief, chaque élément étant délimité par des rainures (2, 3) de profondeur **H**, chaque élément comprenant une face de contact (50) destinée à être en contact avec la chaussée et des faces latérales coupant la face de contact selon des premières arêtes (12, 13), une pluralité d'éléments de la bande étant pourvus d'au moins une incision (4) de profondeur **P**, cette incision débouchant sur la face de contact (50) pour former des deuxièmes arêtes parallèles entre elles et d'orientation moyenne au plus égale à 45° avec la direction de l'axe de rotation du pneu pourvu de cette bande, chaque incision (4) débouchant en outre sur deux surfaces latérales de l'élément de manière à former des lames (5) ayant une longueur **L** et une largeur **d**, cette largeur **d** étant inférieure à la longueur **L**, cette bande étant **caractérisée en ce que** chaque lame (5) comprend au moins une cavité (6) entièrement contenue dans la lame et dont la plus grande dimension est orientée de manière à être dans la direction de la longueur de la lame à l'intérieur de laquelle elle est formée, chaque cavité ayant une longueur **Lc**, mesurée selon sa plus grande dimension, qui est comprise entre 10% et 90% de la longueur **L** de la lame dans le but de d'accroître sensiblement les pressions de contact le long des premières et des deuxièmes arêtes.

2. Bande de roulement selon la revendication 1 **caractérisée en ce que** la somme des longueurs **Le** de toutes les cavités (6) d'une même lame est supérieure à 50% de la longueur **L** de ladite lame.

3. Bande de roulement selon la revendication 1 **caractérisée en ce que** la somme des longueurs de toutes les cavités (6) d'une même lame (5) est supérieure à 80% de la longueur **Lc** de ladite lame et **en ce que** la largeur de chaque cavité est supérieure à 80% de la largeur **d** de ladite lame.

4. Bande de roulement selon l'une des revendications 1 à 3 **caractérisée en ce que** les cavités (6) d'une même lame (5) sont situées à une profondeur sous la surface de roulement comprise entre 10% et 50% de la profondeur **H** des rainures.

5. Bande de roulement selon l'une des revendications 1 à 4 **caractérisée en ce que** chaque cavité est prolongée vers la face de contact de la lame par une incision de largeur inférieure à 1 mm et de longueur sensiblement égale à la dimension transversale de ladite cavité, cette incision ne débouchant sur aucune face latérale de la lame et étant orientée selon une direction sensiblement perpendiculaire à la direction des deuxièmes arêtes, cette incision ayant une longueur sensiblement égale à la dimension transversale de la cavité qu'elle prolonge.

6. Bande de roulement selon l'une des revendications 1 à 5 **caractérisée en ce que** chaque lame ayant un volume total **Ve,** la somme des volumes des cavités d'une même lame est au moins égale à 20% et au plus égale à 80% du volume total **Ve** de ladite lame.

7. Bande de roulement selon la revendication 6 **caractérisée en ce que** la somme des volumes des cavités d'une même lame est au moins égale à 40% et au plus égale à 60% du volume total Ve de ladite lame.

8. Bande de roulement selon l'une des revendications 1 à 7 **caractérisée en ce que** chaque cavité est de forme cylindrique de section circulaire de diamètre **r**.

9. Bande de roulement selon l'une des revendications 1 à 8 **caractérisée en ce que** chaque cavité d'une lame est prolongée vers l'intérieur de la bande par une incision de largeur inférieure à 1 mm, cette dernière étant elle même prolongée par une autre cavité.

10. Bande de roulement selon l'une des revendications 1 à 9 **caractérisée en ce que** la longueur **Lc** de la cavité prolongeant chaque incision longitudinale est avantageusement comprise entre 0.5 et 1.5 fois la longueur de cette incision.

11. Bande de roulement selon l'une des revendications 1 à 10 **caractérisée en ce que** la largeur **d** des lames est au plus égale à 50% de la longueur **L** des lames.

## Claims

1. Tyre tread comprising a plurality of elements (10) forming relief, each element being delimited by grooves (2, 3) of depth **H**, each element comprising a contact face (50) designed to be in contact with the road surface and lateral faces cutting the contact face along first edges (12, 13), a plurality of elements of the tread being provided with at least one incision (4) of depth **P**, this incision opening onto the contact face (50) in order to form second edges parallel with one another and with an average orientation at most equal to 45° with the direction of the axis of rotation of the tyre provided with this tread, each incision (4) also opening onto two lateral surfaces of the element so as to form strips (5) having a length **L** and a width **d**, this width **d** being less than the length **L**, this tread being **characterized in that** each strip (5) comprises at least one cavity (6) entirely contained in the strip and of which the largest dimension is oriented so as to be in the direction of the length of the strip inside which it is formed, each cavity having a length **Lc**, measured along its largest dimension, which is between 10% and 90% of the length **L** of the strip, and **in that** the total of the lengths **Lc** of all the cavities (6) of one and the same strip (5) is more than 10% of the length **L** of the said strip, for the purpose of substantially increasing the contact pressures along the first and second edges.

2. Tread according to Claim 1, **characterized in that** the total of the lengths **Lc** of all the cavities (6) of one and the same strip is more than 50% of the length **L** of the said strip.

3. Tread according to Claim 1, **characterized in that** the total of the lengths of all the cavities (6) of one and the same strip (5) is more than 80% of the length **Lc** of the said strip and **in that** the width of each cavity is more than 80% of the width **d** of the said strip.

4. Tread according to one of Claims 1 to 3, **characterized in that** the cavities (6) of one and the same strip (5) are situated at a depth beneath the running surface of between 10% and 50% of the depth **H** of the grooves.

5. Tread according to one of Claims 1 to 4, **characterized in that** each cavity is extended towards the contact face of the strip by an incision with a width of less than 1 mm and with a length substantially equal to the transverse dimension of the said cavity, this incision not opening onto any lateral face of the strip and being oriented in a direction substantially perpendicular to the direction of the second edges, this incision having a length substantially equal to the transverse dimension of the cavity that it extends.

6. Tread according to one of Claims 1 to 5, **characterized in that**, since each strip has a total volume **Ve**, the total of the volumes of the cavities of one and the same strip is at least equal to 20% and at most equal to 80% of the total volume **Ve** of the said strip.

7. Tread according to Claim 6, **characterized in that** the total of the volumes of the cavities of one and the same strip is at least equal to 40% and at most equal to 60% of the total volume **Ve** of the said strip.

8. Tread according to one of Claims 1 to 7, **characterized in that** each cavity is of cylindrical shape with a circular section with a diameter **r.**

9. Tread according to one of Claims 1 to 8, **characterized in that** each cavity of a strip is extended towards the inside of the tread by an incision with a width of less than 1 mm, the latter itself being extended by another cavity.

10. Tread according to one of Claims 1 to 9, **characterized in that** the length **Lc** of the cavity extending each longitudinal incision is advantageously between 0.5 and 1.5 times the length of this incision.

11. Tread according to one of Claims 1 to 10, **characterized in that** the width **d** of the strips is at most equal to 50% of the length **L** of the strips.

## Patentansprüche

1. Laufstreifen für eine Reifen, der eine Vielzahl von ein Relief bildendes Elementen (10) aufweist, wobei jedes Element von Rillen (2, 3) einer Tiefe H begrenzt wird, wobei jedes Element eine Kontaktseite (50), die dazu bestimmt ist, mit der Straße in Kontakt zu sein, und Seitenflächen enthält, die die Kontaktseite gemäß ersten Kanten (12, 13) schneiden, wobei eine Vielzahl von Elementen des Streifens mit mindestens einem Einschnitt (4) einer Tiefe P versehen sind, wobei dieser Einschnitt an der Kontaktseite (50) mündet, um zueinander parallele und eine mittlere Ausrichtung höchstens gleich 45° zur Richtung der Drehachse des mit diesem Streifen versehenen Reifens aufweisende zweite Kanten zu formen, wobei jeder Einschnitt (4) außerdem an zwei Seitenflächen des Elements mündet, um Lamellen (5) zu formen, die eine Länge L und eine Breite d haben, wobei diese Breite d geringer als die Länge L ist, wobei dieser Streifen **dadurch gekennzeichnet ist, dass** jede Lamelle (5) mindestens einen Hohlraum (6) enthält, der ganz in der Lamelle enthalten ist und dessen größte Abmessung so ausgerichtet ist, dass sie sich in Richtung der Länge der Lamelle befindet, in der er geformt ist, wobei jeder Hohlraum eine Länge Lc gemessen gemäß seiner größten Abmessung hat, die zwischen 10% und 90% der Länge L der Lamelle liegt, um die Kontaktdrücke entlang der ersten und zweiten Kanten deutlich zu erhöhen.

2. Laufstreifen nach Anspruch 1, **dadurch gekennzeichnet, dass** die Summe der Längen Lc aller Hohlräume (6) der gleichen Lamelle größer als 50% der Länge L der Lamelle ist.

3. Laufstreifen nach Anspruch 1, **dadurch gekennzeichnet, dass** die Summe der Längen aller Hohlräume (6) der gleichen Lamelle (5) größer als 80% der Länge L der Lamelle ist, und dass die Breite jedes Hohlraums größer als 80% der Breite d der Lamelle ist.

4. Laufstreifen nach einem der Ansprüche 1 bis 3, **dadurch gekennzeichnet, dass** die Hohlräume (6) einer gleichen Lamelle (5) sich in einer Tiefe unter der Lauffläche befinden, die zwischen 10% und 50% der Tiefe H der Rillen liegt.

5. Laufstreifen nach einem der Ansprüche 1 bis 4, **dadurch gekennzeichnet, dass** jeder Hohlraum zur Kontaktseite der Lamelle durch einen Einschnitt einer Breite von weniger als 1 mm und einer Länge im Wesentlichen gleich der Querabmessung des Hohlraums verlängert wird, wobei dieser Einschnitt an keiner Seitenfläche der Lamelle mündet und gemäß einer Richtung im Wesentlichen lotrecht zur Richtung der zweiten Kanten ausgerichtet ist, wobei dieser Einschnitt eine Länge im Wesentlichen gleich der Querabmessung des Hohlraums hat, den er verlängert.

6. Laufstreifen nach einem der Ansprüche 1 bis 5, **dadurch gekennzeichnet, dass**, wenn jede Lamelle ein Gesamtvolumen Ve hat, die Summe der Volumen der Hohlräume der gleichen Lamelle mindestens gleich 20% und höchstens gleich 80% des Gesamtvolumens Ve der Lamelle ist.

7. Laufstreifen nach Anspruch 6, **dadurch gekennzeichnet, dass** die Summe der Volumen der Hohlräume der gleichen Lamelle mindestens gleich 40% und höchstens gleich 60% des Gesamtvolumens Ve der Lamelle ist.

8. Laufstreifen nach einem der Ansprüche 1 bis 7, **dadurch gekennzeichnet, dass** jeder Hohlraum eine zylindrische Form mit einem Kreisquerschnitt des Durchmessers r hat.

9. Laufstreifen nach einem der Ansprüche 1 bis 8, **dadurch gekennzeichnet, dass** jeder Hohlraum einer Lamelle zum Inneren des Streifens durch einen Einschnitt einer Breite von weniger als 1 mm verlängert wird, wobei dieser letztere selbst durch einen weiteren Hohlraum verlängert wird.

10. Laufstreifen nach einem der Ansprüche 1 bis 9, **dadurch gekennzeichnet, dass** die Länge Lc des jeden Längseinschnitt verlängernden Hohlraums vorteilhafterweise zwischen 0.5 und 1.5 Mal der Länge dieses Einschnitts liegt.

11. Laufstreifen nach einem der Ansprüche 1 bis 10, **dadurch gekennzeichnet, dass** die Breite d der Lamellen höchstens gleich 50% der Länge L der Lamellen ist.
